Europäisches Patentamt

**European Patent Office**

**Office européen des brevets**

(19)

(11) Publication number: **0 109 156**
**A2**

# EUROPEAN PATENT APPLICATION

(12)

(21) Application number: **83305696.3**

(22) Date of filing: **23.09.83**

(51) Int. Cl.³: **B 60 J 7/10**

(30) Priority: **20.10.82 GB 8229928**

(71) Applicant: **PANARAMA SUNROOFS LIMITED, Commerce House Stuart Street, Luton Bedfordshire (GB)**

(43) Date of publication of application: **23.05.84**
**Bulletin 84/21**

(72) Inventor: **Garrard, Clive William, 56 Penzance Avenue, Wigston Leicester (GB)**
Inventor: **Wass, Anthony Charles Lammond, The Mousehole, Duddington Northamptonshire (GB)**

(84) Designated Contracting States: **AT BE CH DE FR GB IT LI LU NL SE**

(74) Representative: **Prentice, Raymond Roy, R.R. Prentice & Co. 34 Tavistock Street, London WC2E 7PB (GB)**

(54) **Latch mechanism for vehicle sun roofs.**

(57) A vehicle sun roof comprises an outer frame (2) which is adapted to be fitted to the roof (3) of a vehicle, in an aperture of said roof designed to accommodate the frame, and a closure panel (1) connected to the frame (2) by a hinge connection (15) which is mounted on the closure panel (1) and which is releasably connected to the outer frame (2). The sun roof further has a latch mechanism for holding the closure panel in a closed position on the frame and for maintaining the closure panel in an opened position. The latch mechanism comprises a first mounting block (32) fitted to the closure panel (1), a second mounting block (33) fitted to the frame (2) and a pivoting link assembly comprising a lever (34) pivotally connected at one end to the first mounting block (32) and a link (35) pivotally connected at one end to the second mounting block (33) and pivotally connected at its other end to the lever (34). The pivot axes of the lever and link connections are substantially perpendicular to the pivot axis of the hinge connection. The lever (34) is provided with an opening handle (42) and the connection between the lever (34) and the first mounting block (32) and/or between the link (35) and the second mounting block (33) is detachable.

COMPLETE DOCUMENT

This invention relates to vehicle sun roofs and is particularly concerned with latch mechanisms for such vehicle roofs.

It is a requirement of vehicle sun roofs that they can not only be moved between at least one open position and a closed position and be completely sealed from the elements when in the closed position but also that the roof panel should be readily removable from the frame structure and easily replaced without the necessity of providing tools in order to achieve removal and refitting.

The present invention aims to provide a latch mechanism for a removable closure member, such as a vehicle sun roof, which meets the above requirements.

According to the invention, there is provided a vehicle sun roof comprising an outer frame adapted to be fitted to the roof of a vehicle in an aperture of said roof designed to accommodate said frame and a closure panel hingedly connected to the frame, a hinge connection being provided which is mounted on the closure panel and which is releasably connectable to the outer frame and the sun roof further having a latch mechanism for holding the closure panel in a closed position on the frame and for maintaining the closure panel in an opened position; wherein the latch mechanism comprises a first mounting block fitted to the closure panel, a second mounting block fitted to the frame and a pivoting link assembly comprising a lever pivotally connected at one end to the first mounting block and a link pivotally connected at one end to the second mounting block and pivotally connected at its other end to the lever, the pivot axes of the lever and link connections being substantially perpendicular to the pivot axis of the said hinge connection and the lever being provided with an operating handle, and wherein the connection between the lever and the first mounting block and/or between the link and the second mounting block is detachable.

Preferably, the connection between the link and the second mounting block is detachable and comprises a tapered spigot which is receivable in a bore in the mounting block, said spigot having a groove in which resilient means are engageable to hold the spigot in the bore and the spigot being removable from the bore only by overcoming the force of said resilient means. A catch is desirably provided to move the resilient means out of said groove when it is desired to withdraw the spigot from the bore in the mounting block.

The latch mechanism desirably includes a locking means whereby the mechanism may be locked in at least the closed position of the closure panel. According to one embodiment, the locking means comprise a spring loaded plunger mounted in the second mounting block and engageable in a recess in the first mounting block when the closure panel is in its closed position. Means may be provided which are operative to prevent the plunger from being moved out of said recess in the first mounting block.

The invention will now be further described, by way of example, with reference to the drawings, in which:-

Fig. 1 is a plan view of one embodiment of a vehicle sun roof according to the invention;

Fig. 2 is a section taken on the line II-II in Fig. 1 in the direction of the arrows and showing the sun roof fitted in the roof of a vehicle with the closure panel in the open position;

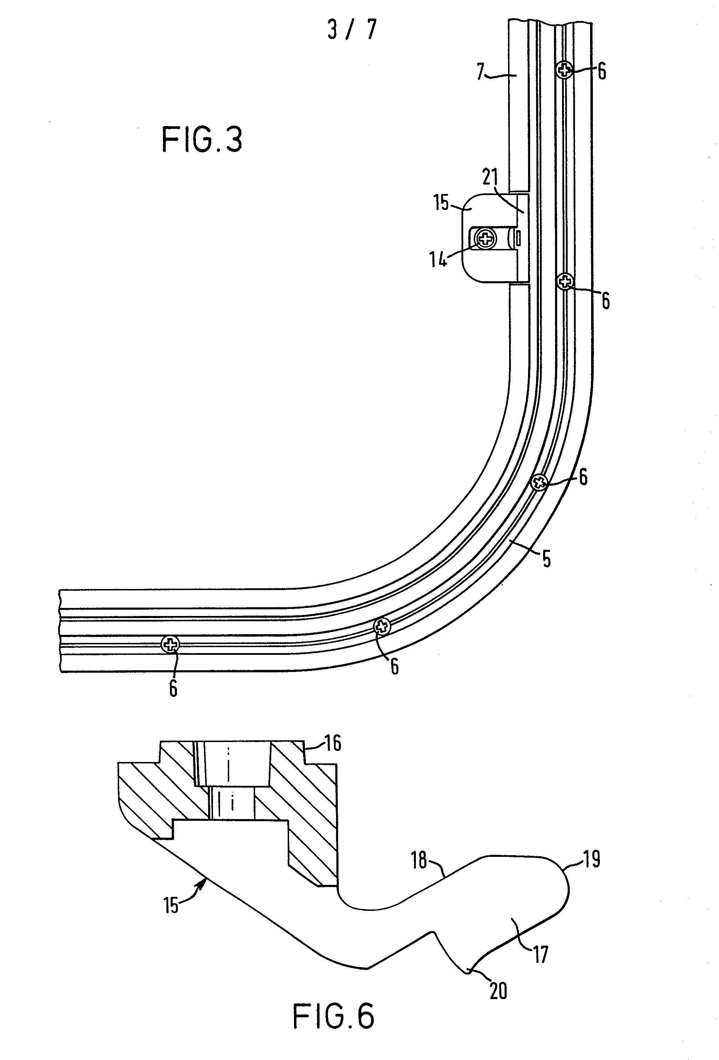

Fig. 3 is an underneath view of part of the roof shown in Figs. 1 and 2 illustrating the mounting of a hinge block in the outer frame of the roof;

Fig. 4 is a plan view of one embodiment of a hinge block forming part of the hinge mechanism of the sun roof shown in Figs. 1 to 3;

Fig. 5 is a section taken on the line V-V in Fig. 4 in the direction of the arrows;

Fig. 6 is a section taken on the line VI-VI in Fig. 4 in the direction of the arrows;

Fig. 7 is a plan view of a hinge locating bracket;

Fig. 8 is a section taken on the line VIII-VIII in Fig. 7 in the direction of the arrows;

Fig. 9 is a side elevation of the hinge locating bracket shown in Figs. 7 and 8;

Fig. 10 is an elevation of one embodiment of a latch mechanism according to the invention viewed in the direction of the arrow C in Fig. 2; and

Fig. 11 is a section, viewed from above, of the latch mechanism shown in Fig. 10 but showing the relative dispositions of the various components in the closed position of the closure panel.

Referring to the drawings, the vehicle sun roof according to the invention comprises a closure panel 1 which is hingedly mounted on an outer frame 2. The closure panel 1 is preferably made of a transparent or translucent material such as glass or a synthetic plastics material, e.g. a polycarbonate or polyacrylate although the panel may, if desired, be made of an opaque material.

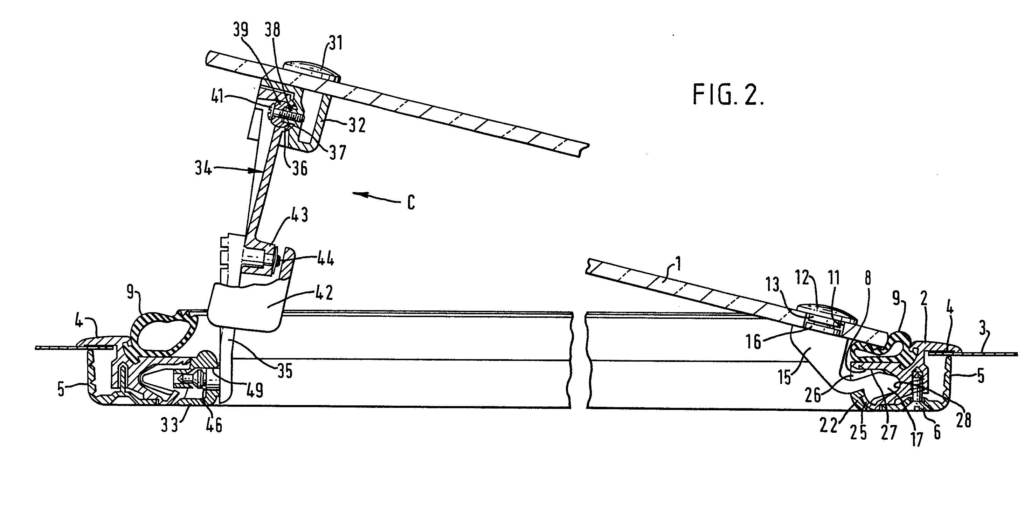

As shown in Fig. 2, the outer frame 2 is adapted to be fitted into an opening cut into a vehicle roof 3 and is provided with an upper flange 4 which overlaps the edges of the roof opening. The frame 2 is secured in place by means of a lower frame 5 which is arranged to engage with the outer frame 2 and with the underside of the vehicle roof 3. The lower frame 5 is secured to the frame 2 by a series of screws 6. After the frames 2 and 5 have been fitted to the roof 3, the roof headlining (not shown) is drawn over the lower frame 5 and lower part of the frame 2 and is secured in a channel 8 in the frame 2 by a trim strip 7 of resilient material. A sealing ring or gasket 9 of resilient material such as rubber or polyurethane is secured to the frame 2 to provide a seal and support for the panel 1 when the panel is in the closed position.

The panel 1 is provided, adjacent one edge, with a pair of bores 11 for the reception of respective bosses 16 on a pair of hinge blocks 15 (only one shown in the drawings). The hinge blocks 15 are secured to the panel 1 by means of roof fixing mounts provided with heads 12 and shanks 13, the shanks being receivable in the bores 11. The hinge blocks 15 are secured to the fixing mounts by means of screws 14 whereby the panel 1 is held between the heads 12 of the fixing mounts and the hinge blocks 15.

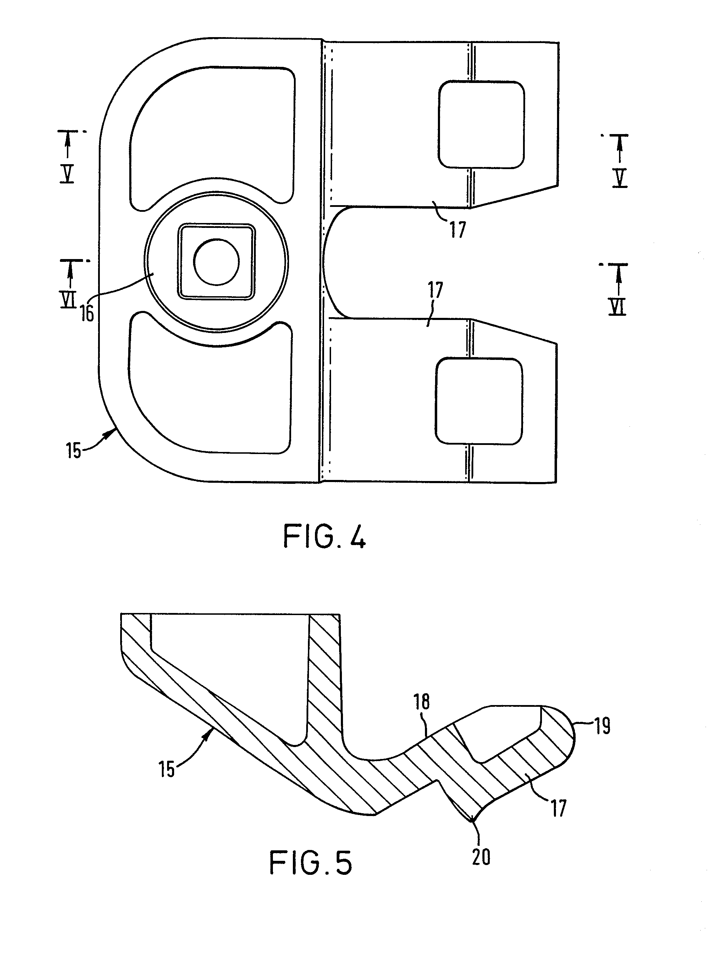

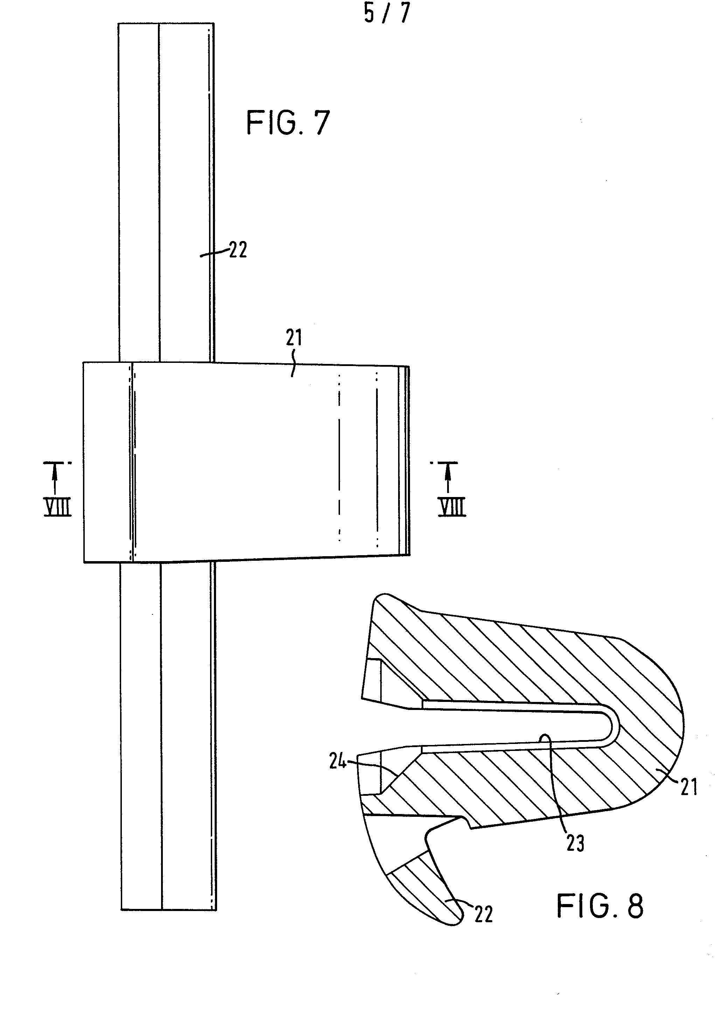

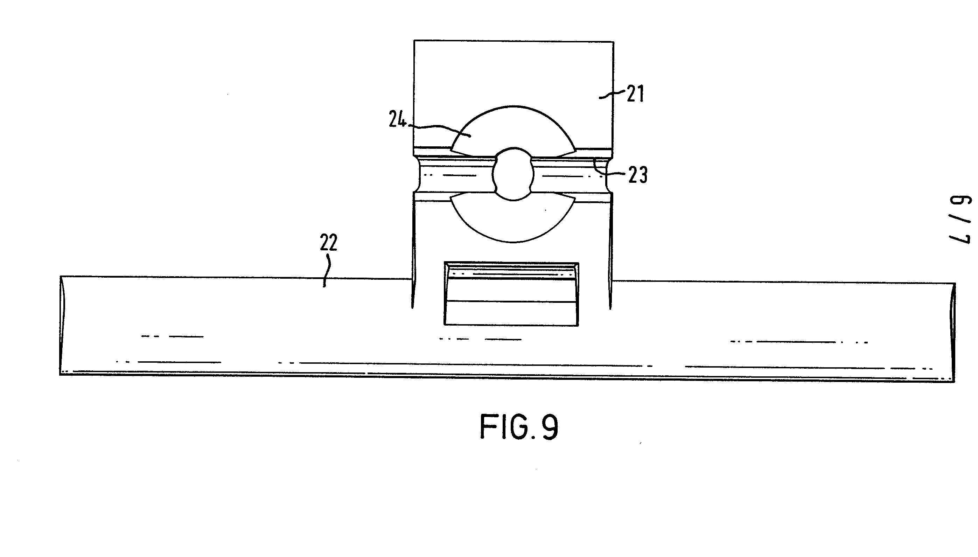

As shown more particularly in Figs. 4 to 6, each hinge block 15 is provided with a pair of tongues 17 each having a substantially planar surface 18, an arcuate region 19 and an arcuate projection 20. The hinge blocks 15 are receivable in the channel 8 in the frame 2 and are located by respective hinge locating blocks 21. As shown in Figs. 7 to 9, each hinge locating block 21 is provided with a strip 22 which is adapted to engage over and to co-operate with a lip 25 delimiting an opening 26 to the channel 8 in the frame 2. The trim strip 7 is omitted in the regions of the frame 2 which are occupied by the strips 22 of the hinge locating blocks. Each block 21 is further provided with a slot 23 terminating at its open end in a countersink 24. The block is made of resilient material and is capable of being received in the channel 8 by squeezing the block so that it can pass through the opening 26 leading to the channel 8. The block 21 can then be secured in place by screwing a screw (not shown) into the slot 23, the head of the screw being located in the countersink 24 and the strip 22 engaging over the lip 25. The width of each block 21 is such that it is receivable between the tongues 17 of the associated hinge block 15 whereby the hinge blocks, and hence the panel, are positively located in position on the frame 2.

The panel 1 is further provided, adjacent the edge opposite to the edge at which the bores 11 are provided, with a further pair of bores for the reception of further fixing mounts 31 by means of which a mounting block 32 may be secured to the panel 1. A further mounting block 33 is secured to the frame 2 and the two mounting blocks 32 and 33 are interconnected by a pivoting link assembly. This assembly comprises a lever 34 and a link 35.

As shown in Fig. 2, the lever 34 is provided with a rounded projection 36 at one end which is arranged to be received in an arcuate recess in the mounting block 32, the block having a tubular projection 38 which projects through an opening 37 in said projection 36. A ball 39 of resilient material is fitted over the end of the tubular projection 38 and engages in an arcuate recess in the lever 34 behind the rounded projection 36. A screw 41 passes through the ball 39 and engages in the tubular projection 38 to connect the lever 34 to the mounting block 32 in a pivotal manner. The opening 37 is larger than the diameter of the tubular projection 38 and the engagement of the arcuate surfaces of the lever and mounting block as well as the ball 39 permit a limited universal pivoting action between the lever and the mounting block and hence between the lever and the closure panel 1.

The lever 34 is further provided with a handle 42 and with a boss 43 by means of which it is connected to one end of the link 35 by means of a pivot pin 44 which is secured to said end of the link and passes through a bore in the boss 43. The pivot pin 44 is retained in position by means of a spring washer which engages in a groove in the pivot pin 44. The other end of the link 35 is provided with a spigot 46.

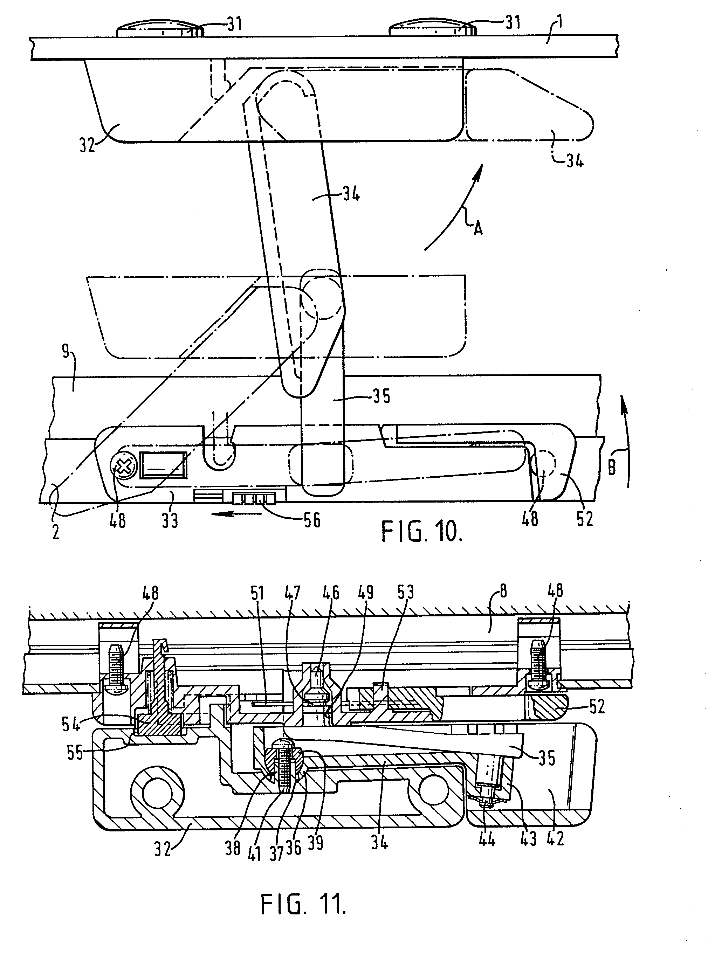

The mounting block 33 is constructed in a similar manner to the hinge locating block 21 and is held in the channel 8 of the frame 2 by means of a pair of screws 48 (Fig. 10). Again, the trim strip 7 is omitted in the region of the mounting block 33. The mounting block 33 is further provided with a bore 49 for the reception of the spigot 46 and a catch spring 51 is provided which is engageable in a groove 47 in the spigot to hold said spigot in the bore 49. The spigot 46 is thus pivotally mounted in the bore and hence the link 35 is pivotally connected to the mounting block 33. A catch 52 is provided to release the spring 51 from the groove 47 in the spigot 46 when it is desired to disconnect the link from the mounting block 33. The catch 52 is pivotally mounted on the mounting block 33 by means of a pivot pin 53.

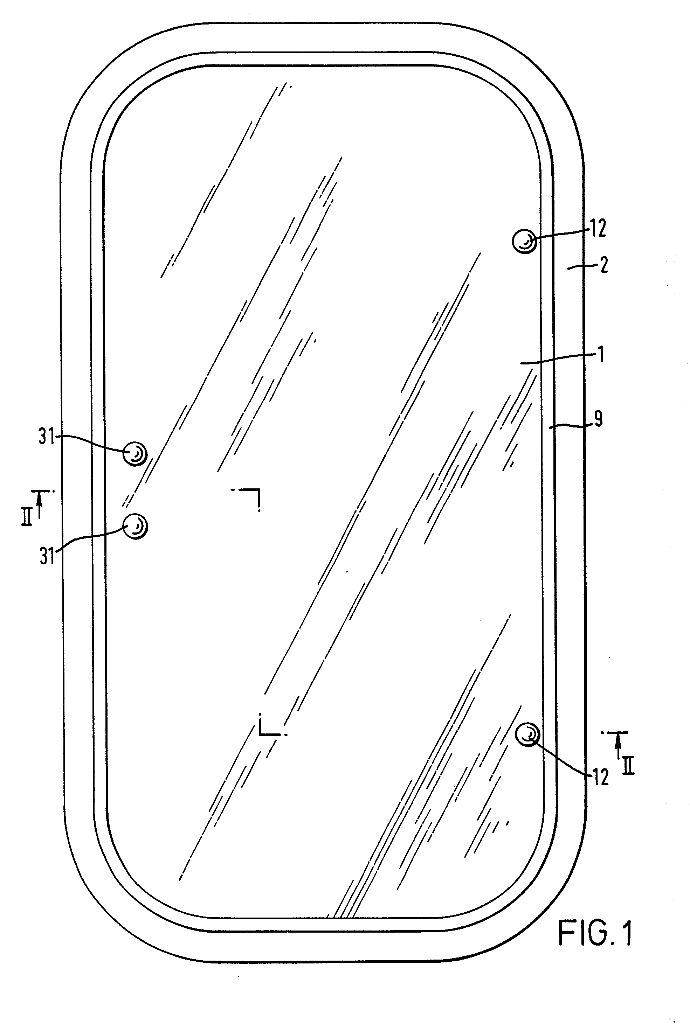

The frame will normally be fitted to the vehicle roof 3 with the panel 1 detached from the frame. However, the hinge locating blocks 21 and the mounting block 33 will normally be fitted to the frame 2 before said frame is fitted to the vehicle roof. Once the frame has been fitted, the trim strip can be secured in place to hold the vehicle roof lining in position and the panel 1 can then be fitted. The panel 1 is offered up to the frame with the planar surfaces 18 of the tongues 17 of the hinge blocks 15 engaging a planar surface 27 of the channel 8 on either side of the respective hinge locating blocks 21. The distance between the planar surface 18 and the tip of the projection 20 of each tongue is less than the width of the opening 26 in the channel so that the tongues can pass into the channel 8. At this stage, the panel 1 is at a steeper angle to the frame 2 than that shown in Fig. 1 and the spigot 46 of the link 35 is not engaged in the bore 49 in the mounting block 33.

The channel 8 is provided with an arcuate surface 28 with which the arcuate surfaces 19 of the tongues 17 are engageable and once the arcuate surfaces 19 of the tongues engage with said arcuate surface 28, the panel 1 may be lowered and the spigot 46 pushed into the bore 49 in the mounting block 33. As previously described, the spigot is retained in the bore by the catch spring 51.

The lever 34 and link 35 now occupy the positions shown in Figs. 2 and 10 of the drawings. If it is desired to close the panel 1, the lever 34 is pivoted by means of the handle 42 in the direction indicated by the curved arrow A in Fig. 10 until it is moved to lie adjacent and substantially parallel to the closure panel 1 as indicated by the chain-dotted lines in Fig. 10. In this position, the link 35 occupies the position also indicated in chain-dotted lines in Fig. 10. In the closed position, the panel 1 is clamped, by an over-centre action of the pivots of the lever 34 and link 35, to the sealing ring or gasket 9 to prevent the ingress of dirt and moisture into the vehicle interior.

The closure panel 1 can be locked in the closed position by means of a spring-loaded plunger 54 (Fig.11) which is engageable in a recess 55 in the mounting block 32. The plunger may be held in this position by sliding a slider 56 to the left as shown in the drawings in order to prevent the plunger from moving out of the recess. The closure panel is thus effectively locked in its closed position and unauthorised entry into the vehicle through the roof panel is prevented.

When it is desired to move the closure panel 1 to an open position, the slider 56 is first moved to the right to the position shown in Fig. 10 and the plunger 54 can then be forced out of the recess 55, against the force of its spring, simply by pushing the mounting block 32 upwards. The handle 42 can now be moved downwards in the opposite direction to the arrow A in Fig. 10 whereby the closure panel 1 is moved by the linkage assembly formed by the lever 34 and link 35 to an open position. The panel 1 will normally be held in the fully open position by an over-centre action of the pivots of the lever 34 and link 35 but the panel 1 may also be held in one or more intermediate positions by providing the link 35 with a number of recesses in which the plunger 34 is engageable. The plunger may be held in said recess or recesses by moving the slider 56 to the left in Fig. 10 of the drawings to lock the panel in said intermediate position(s).

The inter-engagement of the arcuate surfaces 19 on the tongues 17 of the hinge block 15 with the arcuate surface 28 of the channel 8 provides a pivot axis for pivoting the panel 1 between the closed position and the open position shown in Figs. 2 and 10 of the drawings. In both positions of the panel 1, and in all of its intermediate positions, the disposition of the tongues 17 relative to the channel 8 is such that the co-operation of the arcuate projections 20 with the lip 25 prevents the tongues from being withdrawn from the channel whereby the hinge blocks 15 are effectively retained in the channel.

When it is desired to remove the panel 1, the panel must first be moved to the open position shown in Figs. 2 and 10 of the drawings. The catch 52 is then moved upwards about its pivot 53 in the direction indicated by the arrow B in Fig. 10. The other end of the catch 52 then bears down on the catch spring 51 to force it out of the groove 47 in the spigot 46. The spigot 46 can now be withdrawn from the bore 49 in the mounting block 33 to free the pivoting link assembly from the frame 2.

The panel 1 can now be moved to its fitting position in which the arcuate projections 20 on the hinge blocks 15 are clear of the lip 25 of the channel and the tongues 17 can be withdrawn from the channel 8 in order to remove the panel 1 from the frame 2.

The hinge blocks 15, hinge locating blocks 21, mounting blocks 32 and 33, the lever 34 and the link 35 are preferably made of synthetic plastics material although other materials may be used if desired. For example, it may be preferred for the link to be a die casting.

It will be seen that the latch mechanism according to the invention enables the closure panel of a vehicle sun roof to be readily detached and re-fitted to the outer frame. Morever, it provides a secure fastening for the closure panel in its closed position.

- 1 -

CLAIMS

1.   A vehicle sun roof comprising an outer frame adapted to be fitted to the roof of a vehicle in an aperture of said roof designed to accommodate said frame and a closure panel hingedly connected to the frame, a hinge connection being provided which is mounted on the closure panel and which is releasably connectable to the outer frame and the sun roof further having a latch mechanism for holding the closure panel in a closed position on the frame and for maintaining the closure panel in an opened position; wherein the latch mechanism comprises a first mounting block fitted to the closure panel, a second mounting block fitted to the frame and a pivoting link assembly comprising a lever pivotally connected at one end to the first mounting block and a link pivotally connected at one end to the second mounting block and pivotally connected at its other end to the lever, the pivot axes of the lever and link connections being substantially perpendicular to the pivot axis of the said hinge connection and the lever being provided with an operating handle, and wherein the connection between the lever and the first mounting block and/or between the link and the second mounting block is detachable.

- 2 -

2.    A vehicle sun roof according to claim 1, wherein the connection between the link and the second mounting block is detachable and comprises a tapered spigot which is receivable in a bore in the mounting block, said spigot having a groove in which resilient means are engageable to hold the spigot in the bore and the spigot being removable from the bore only by overcoming the force of said resilient means.

3.    A vehicle sun roof according to claim 2, wherein a catch is provided to move the resilient means out of said groove when it is desired to withdraw the spigot from the bore in the mounting block, said catch preferably being pivotally mounted on the second mounting block.

4.    A vehicle sun roof according to any preceding claim, wherein a locking means is provided to enable the latch mechanism to be locked in at least the closed position of said closure panel, said locking means comprising a spring-loaded plunger mounted in the second mounting block and engageable in a recess in the first mounting block when the closure panel is in its closed position.

0109156

- 3 -

5. A vehicle sun roof according to claim 4, wherein means are provided which are operative to prevent the plunger from being moved out of said recess in the first mounting block, said means comprising a slider slidably mounted on the second mounting block and movable between a first position in which it is effective to hold the plunger in said recess and a second position in which it frees the plunger.

6. A vehicle sun roof according to claim 4 or claim 5, wherein the first mounting block is provided with at least one further recess in which said plunger is engageable to hold the closure panel in at least one open or partially-open position.

7. A vehicle sun roof according to any preceding claim, wherein the connection between the lever and the first mounting block comprises a rounded projection on said one end of the lever which is engageable in an arcuate recess provided in the mounting block to provide limited universal pivoting action between the lever and mounting block.

8. A vehicle sun roof according to claim 7, wherein the mounting block is provided with a tubular projection arranged to project through an opening in the rounded projection on said lever, the opening having a larger diameter than that of the tubular projection to permit said limited universal pivoting action.

- 4 -

9.   A vehicle sun roof according to claim 8, wherein a ball of resilient material is fitted over the end of said tubular projection and engages in an arcuate recess in said one end of the lever behind said rounded projection, a screw passing through said ball and engaging in the tubular projection to connect the lever to the mounting block in a pivotal manner.

10.   A vehicle sun roof substantially as described herein with reference to the drawings.

FIG.1

FIG.2.

FIG.3

FIG.6

0109156

FIG. 4

FIG. 5

FIG. 7

22

21

VIII

VIII

24

23

21

22

FIG. 8

FIG.9

FIG. 10.

FIG. 11.